# EUROPEAN PATENT SPECIFICATION

(11) **EP 0 798 204 B1**
(45) Date of publication and mention of the grant of the patent: **05.04.2000**
(21) Application number: 97104635.4
(22) Date of filing: 18.03.1997
(51) Int. Cl.: B62M 23/02

(54) **Regeneration control device for bicycle with auxiliary motor**
Regenerierungs-Steuereinrichtung für Fahrrad mit Hilfsmotor
Dispositif de commande à régénération pour bicyclette avec moteur auxiliaire

(30) Priority: 29.03.1996 JP 10364696
(43) Date of publication of application: 01.10.1997
(73) Proprietor: HONDA GIKEN KOGYO KABUSHIKI KAISHA, Minato-ku, Tokyo (JP)
(72) Inventor: Kuroki, Masahiro, Wako-shi, Saitama (JP); Iwadate, Toru, Wako-shi, Saitama (JP)
(74) Representative: Liska, Horst, Dr.-Ing.

(56) References cited:
- DE-C- 4 229 261
- US-A- 4 111 274
- PATENT ABSTRACTS OF JAPAN vol. 095, no. 009, 31 October 1995 & JP 07 149280 A (KOYO SEIKO CO LTD), 13 June 1995,
- PATENT ABSTRACTS OF JAPAN vol. 095, no. 002, 31 March 1995 & JP 06 321170 A (TOYO BUSSAN KK), 22 November 1994,
- PATENT ABSTRACTS OF JAPAN vol. 016, no. 339 (M-1284), 22 July 1992 & JP 04 100790 A (YAMAHA MOTOR CO LTD), 2 April 1992,

## Description

### SPECIFICATION

### DETAILED DESCRIPTION OF THE INVENTION

### TECHNICAL FIELD TO WHICH THE INVENTION PERTAINS

The present invention relates to a bicycle with an auxiliary motor which assists a rider in pressing the pedal with motor power.

### PRIOR ART

Various kinds of bicycles with an auxiliary motor have been proposed and there is Japanese Unexamined Patent Publication No. Hei 4-100790 as an example referring to a brake control for making a motor generate a braking force.

The example describes that the motor can work as a kind of engine brake when the bicycle goes on a downhill road; a brake sensor detects that the brake is applied, thereby making the motor generate a braking force.

However, the braking force is generated by the motor in the example but the motor works as a generator when the motor generates the braking force and the example makes no reference to regenerating a battery with electric power generated by the motor.

From JP-07149280 a bicycle having an auxiliary electric motor is known, which auxiliary motor serves to generate assisting force corresponding to pressing force on a pedal. The pressing force is detected by a torque sensor. When the torque detected by the torque sensor becomes a specific value or less, the electric motor is supplied with electric energy from a battery in order to generate an assisting force. When a brake is supplied, for example when the bicycle descends on a sloping road, the electric motor serves as a generator and charges the battery with electricity.

### PROBLEMS TO BE SOLVED BY THE INVENTION

In the above described prior art examples, when a brake sensor detects that the brake is put on the motor generates a braking force. Accordingly, the motor does not generate the braking force and therefore can not regenerate electric power until the brake is put on.

When the brake is put on, the pedal is not usually pressed. Accordingly, when the pedal is pressed, the motor does not produce the braking force as a generator and a state of regeneration.

In the case of the bicycle with an auxiliary motor, motor power assists human power to make the force required to press the pedal smaller than in the case of a usual bicycle, but there happens on some downhill road a case in which the force required to press the pedal is too small for a bicycle speed.

A state in which the force required to press the pedal is too small for a bicycle speed, on the contrary, hinders comfortable running and, in particular, when the bicycle is in a state of acceleration, the bicycle is more accelerated and therefore must be decelerated by putting on the brake in the end; therefore it is difficult to maintain comfortable running.

In the case of the conventional example described above, when the pedal is pressed, the brake is not put on and thus the braking force is not produced by the motor. Accordingly, there happens a case in which the force required to press the pedal is too small for a bicycle speed to hinder comfortable running.

The present invention is performed to solve the problems described above and an object of the present invention is to provide a regeneration control device for a bicycle with an auxiliary motor which controls the motor in a state of regeneration to charge a battery and to maintain comfortable running, when the force required to press the pedal is too small for a bicycle speed.

### MEANS FOR SOLVING THE PROBLEMS

In order to accomplish the above described object, the present invention is a regeneration control device for a bicycle with an auxiliary motor provided with a drive control means for driving and controlling a motor to generate assisting force corresponding to pressing force on a pedal, the regeneration control device comprising a bicycle speed detection means for detecting the speed of the bicycle, a pressing force detection means for detecting pressing force on the pedal, and a regeneration control means for judging the necessity of regeneration based on the bicycle speed detected by the above described bicycle speed detection means and the pressing force detected by the above described pressing force detection means and for changing the above described motor to a state of regeneration.

Since the regeneration control means judges the necessity of regeneration based on the bicycle speed and the pressing force, when the pressing force is too small for the bicycle speed, the motor is changed to a state of regeneration to generate electric power as a generator and to regenerate a battery with electric power generated, thereby reducing power consumption of the battery and maintaining comfortable running by exerting braking force produced by the motor as a generator on the bicycle.

Since in the present invention the regeneration control means judges the necessity of regeneration based on the bicycle speed and the pressing force, when the pressing force is too small for the bicycle speed, the regeneration control means judges that the regeneration is necessary and changes the motor to a state of regeneration. Electric power generated by the motor can regenerate the battery to save the electric consumption of the battery and the braking force of the motor as a generator can be exerted on the bicycle to keep comfortable running.

The above described regeneration control means is a regeneration control means for a bicycle with an auxiliary motor described in claim 1 which memorizes in advance the judgment value of regeneration of the pressing force corresponding to the bicycle speed and changes the above described motor to a state of regeneration if actual pressing force detected by the above described pressing force detection means at a certain bicycle speed is smaller than the above described judgment value of regeneration.

If the judgment value of regeneration is set at a state of comfortable running, when the pressing force is too small for the bicycle speed and smaller than the judgment value of regeneration, the motor can be changed to a state of regeneration to charge the battery and to come near comfortable running by the braking force.

The above described regeneration control means is a regeneration control means for a bicycle with an auxiliary motor described in claim 2 which determines in advance the pressing force required to run a flat road in response to the bicycle speed under a drive control by the above described drive control means and memorizes it as the above described judgment value of regeneration and changes the above described motor to a state of regeneration if actual pressing force detected by the above described pressing force detection means at a certain bicycle speed is smaller than the above described judgment value of regeneration.

The regeneration control means determines in advance the pressing force required to run on a flat road in response to the bicycle speed under a drive control by the above described drive control means and memorizes it as the judgment value of regeneration. Accordingly, the regeneration control means compares the bicycle speed and the pressing force which are actually detected with the memorized judgment value of regeneration and if the actual pressing force is smaller than the judgment value of regeneration, it can judge that regeneration is necessary and change the motor to a state of regeneration to charge the battery and to keep comfortable running even on a downhill road with any gradient as is the case for running on a flat road.

The above described regeneration control means is a regeneration control means for a bicycle with an auxiliary motor described in claim 2 or claim 3 which calculates acceleration from the change of the bicycle speed detected by the above described bicycle speed detection means and changes the above described motor to a state of regeneration only when the above described acceleration is a positive value even if the above described actual pressing force is smaller than the above described judgment value of regeneration.

When the acceleration is zero or a negative value, that is to say, the bicycle speed is kept at constant or in a state of deceleration, it is scarcely necessary to disturb the state of the constant speed of the bicycle by regeneration or to decelerate the speed of the bicycle drastically by regeneration, even if the pressing force is too small for the bicycle speed and thus in such a case the motor is not changed to a state of regeneration.

Even if the actual pressing force is smaller than above described judgment value of regeneration, only when acceleration is a positive value, the motor is changed to a state of regeneration and when acceleration is zero or a negative value, that is to say, when the bicycle speed is kept constant or decelerated, the constant speed of the bicycle is disturbed by regeneration or the decelerating speed of the bicycle is decelerated drastically, even if the pressing force is too small for the bicycle speed, thereby keeping a state of comfortable running.

The above described regeneration control means is a regeneration control means for a bicycle with an auxiliary motor described in claim 4 which changes the above described motor to a state of regeneration when the actual pressing force detected by the above described pressing force detection means is zero and the above described acceleration is a positive value.

When the pedal is not pressed, if the bicycle is not in a state of acceleration, it is scarcely necessary to change the motor to a state of regeneration to brake the bicycle and therefore in such a case the motor is not changed to a state of regeneration.

If the actual pressing force is zero, when acceleration is a positive value, the motor is changed to a state of regeneration and when the pedal is not pressed, the motor is not changed to a state of regeneration to brake the bicycle, if the bicycle is not a state of acceleration, thereby keeping a state of comfortable running.

### BRIEF DESCRIPTION OF THE DRAWINGS

Fig. 1 is a general side view of an automatic bicycle with an auxiliary motor according to an example of the present invention.

Fig. 2 is an enlarged side view of a main part in Fig. 1.

Fig. 3 is a sectional view taken on a line III-III in Fig. 2.

Fig. 4 is a block diagram of a control system of a DC motor as an auxiliary motor.

Fig. 5 shows input required to run at a constant bicycle speed.

Fig. 6 shows a change of pressing force of a pedal.

Fig. 7 shows a map of judgment of regeneration in coordinates.

### PREFERRED EMBODIMENT

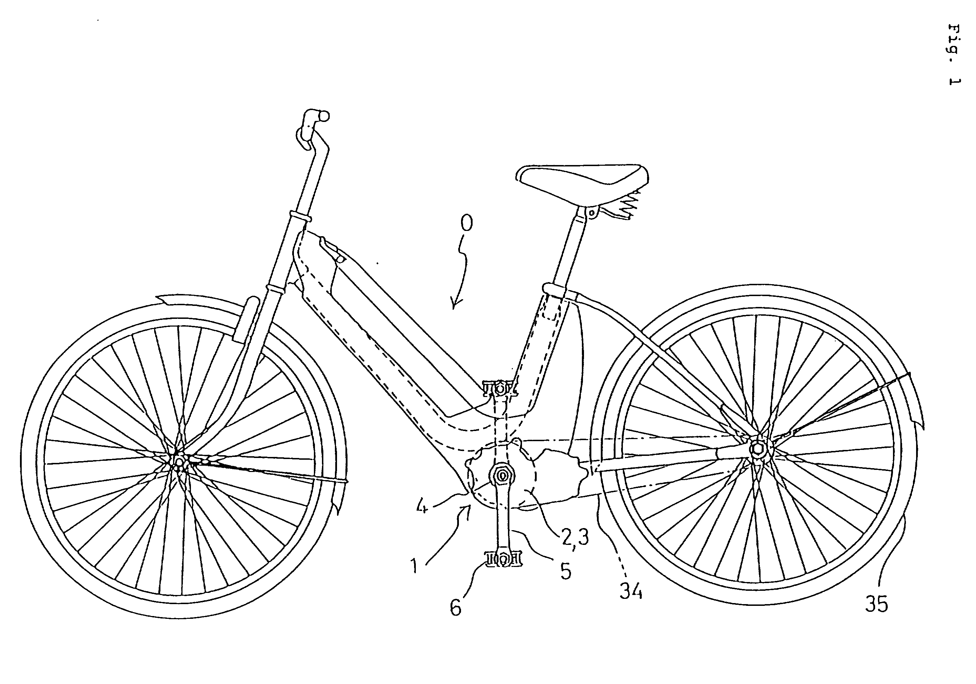

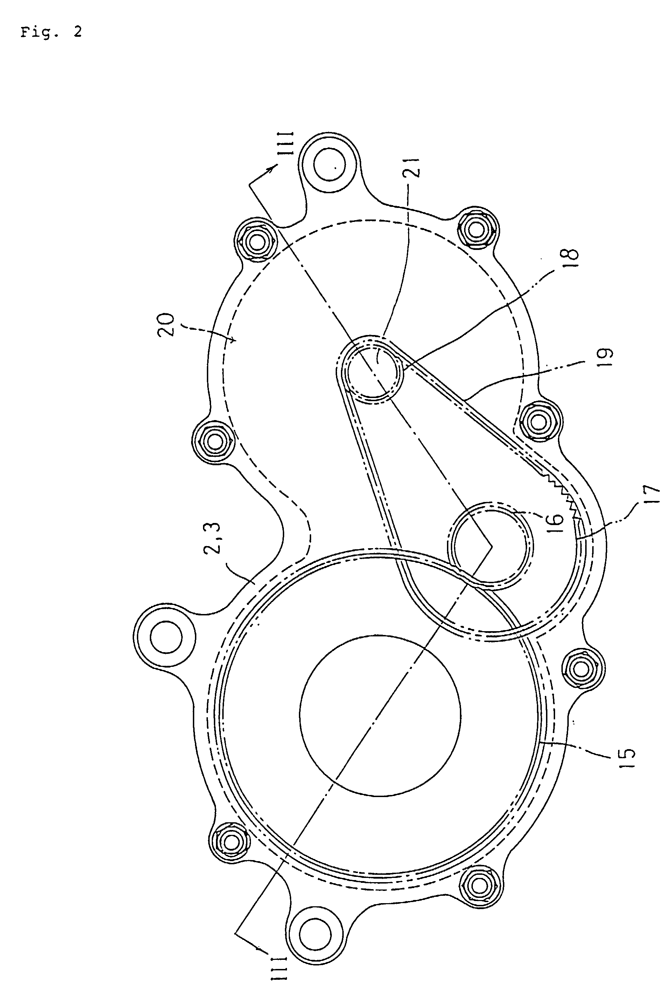

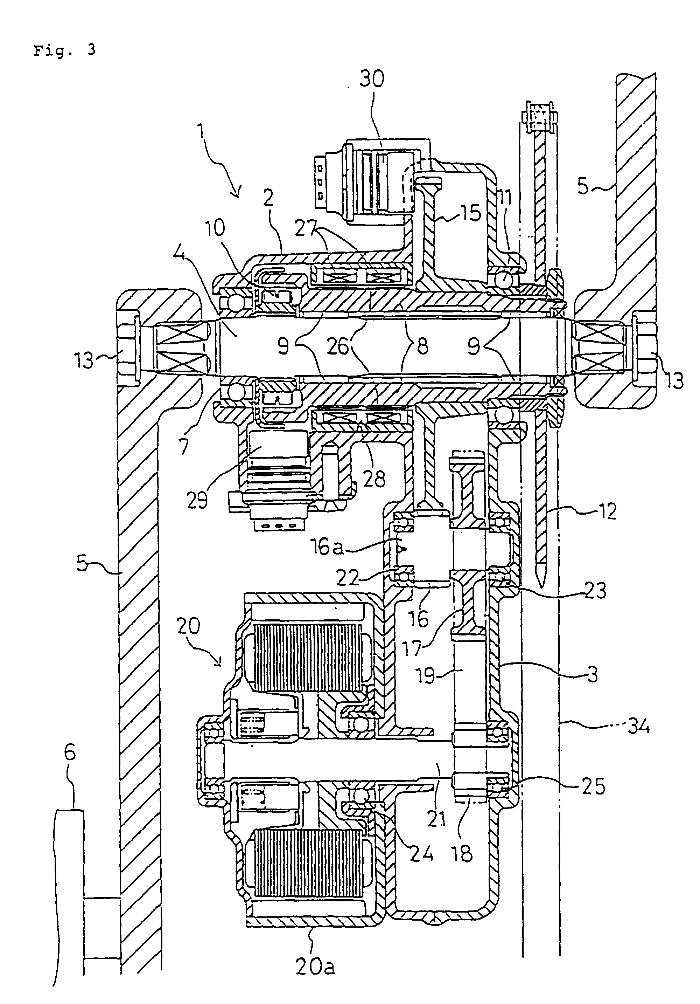

Preferred embodiment of the present is shown in Fig. 1 to Fig.7 and described in the following.

Components of the auxiliary motor device 1 are disposed in a closed space surrounded by an auxiliary motor device casing 2 on a left-hand side and an auxiliary motor device casing (auxiliary motor device cover), 3 on a right-hand side and the auxiliary motor device 1 is integrally mounted on a bicycle body 0.

Moreover, pedal arms 5 are removably, integrally mounted on both ends of a crank shaft 4, a pedal 6 is rotatably mounted at the end of the pedal arm 5, and the left end of the crank shaft 4 is rotatably inserted into a ball bearing 7 of the auxiliary motor device casing 2.

Further, a cylindrical hollow torque transfer member 8 is rotatably fitted on the circumference of the crank shaft 4 via needle bearings 9 and a ratchet one-way clutch 10 of a one-way clutch of pedaling force is inserted between the crank shaft 4 and the cylindrical hollow torque transfer member 8 and adjacently to the ball bearing 7, the right end of the hollow torque transfer member 8 is rotatably inserted in the auxiliary motor device casing 3 via a ball bearing 11, a drive sprocket 12 is fitted like a spline on the right end of the hollow torque transfer member 8 exposed in the right side of the auxiliary motor device casing 3, and a box nut 13 is integrally screwed on the right end of hollow torque transfer member 8.

Even if the rotating speed of the crank shaft 4 is less than the rotating speed of the hollow torque transfer member 8, the hollow torque transfer member 8 can rotate freely by the ratchet one-way clutch 10 to keep the crank shaft 4 and the pedal 6 in a state of stop.

Furthermore, a driven gear 15 is integrally fitted on the hollow torque transfer member 8 at the position of the inside of the ball bearing 11, a driven toothed pulley 17 is integrally fitted on a journal 16a of a reduction gear 16 engaging with the driven gear 15, a drive toothed pulley 18 is integrally fitted on a rotating shaft 21 of a DC motor 20, and a toothed endless belt 19 is bridged between the driven toothed pulley 17 and the drive toothed pulley 18. When the DC motor 20 is energized, the power of the DC motor 20 is transferred to the drive toothed pulley 18, the toothed endless belt 19, the driven toothed pulley 17, the reduction gear 16, the driven gear 15 and the hollow torque transfer member 8 and the hollow torque transfer member 8 is rotated with the drive sprocket 12 to rotate the rear wheel 35 forward via a chain 34.

In this respect, the reduction gear 16 is rotatably held by the auxiliary motor device casing 2 and the auxiliary motor device casing 3 via ball bearings 22, 23 and the rotating shaft 21 of the DC motor 20 is rotatably held by the casing 20a of the DC motor 20 and the auxiliary motor device casing 3 via ball bearings 24, 25.

Since the auxiliary motor device has such a structure described above, on the contrary, it is possible to transfer the rotation of the rear wheel 35 to the DC motor via the chain 34, the drive sprocket 12, the hollow torque transfer member 8, the driven gear 15, the reduction gear 16, the driven toothed pulley 17, the toothed endless belt 19, and the drive toothed pulley 18. Thus it is possible to make the DC motor 20 work as a generator by forcefully rotating the rotating shaft 21 of the DC motor 20 by external forces and thus to regenerate a battery with the generated electric power.

Moreover, the outer circumferential surface of the hollow torque transfer member 8 between the ratchet one-way clutch 10 and the driven gear 15 is wrapped with a thin strip 26 made of amorphous magnetic alloy and a torque detecting coil 27 is disposed on the inner circumferential surface of the auxiliary motor device casing 2 located in the outer side of the thin strip 26 to compose a magnetostriction-type torque sensor 28.

A difference in torque between right-hand input torque and left-hand input torque of the torque detecting cnil 27 of the hollow torque transfer member 8 produces a shear strain on the thin strip 26 to change permeability of the thin strip 26 and the change of permeability of the thin strip 26 is detected by the torque detecting coil 27.

Since the hollow torque transfer member 8 has an input of the assisting power of the DC motor 20 on the right side (output side) of the torque detecting coil 27 and an input of the pressing force to the pedal via the ratchet one-way clutch 10 on the left side of the torque detecting coil 27, the magnetostriction-type sensor 28 can detect only the pressing force which is added to the assisting power of the DC motor 20.

On the other hand, a sensor 29 of the number of revolutions of the crank is mounted on the outside of the ratchet one-way clutch 10 and a bicycle speed sensor 30 is mounted along the driven gear 15.

Since the rotation of the rear wheel 35 is reflected on the rotation of the driven gear 15 via the chain 34, the drive sprocket 12 and the hollow torque transfer member 8, the bicycle speed sensor 30 mounted along the driven gear 15 and detecting the rotation speed of the driven gear 15 can detect the speed of the bicycle 0.

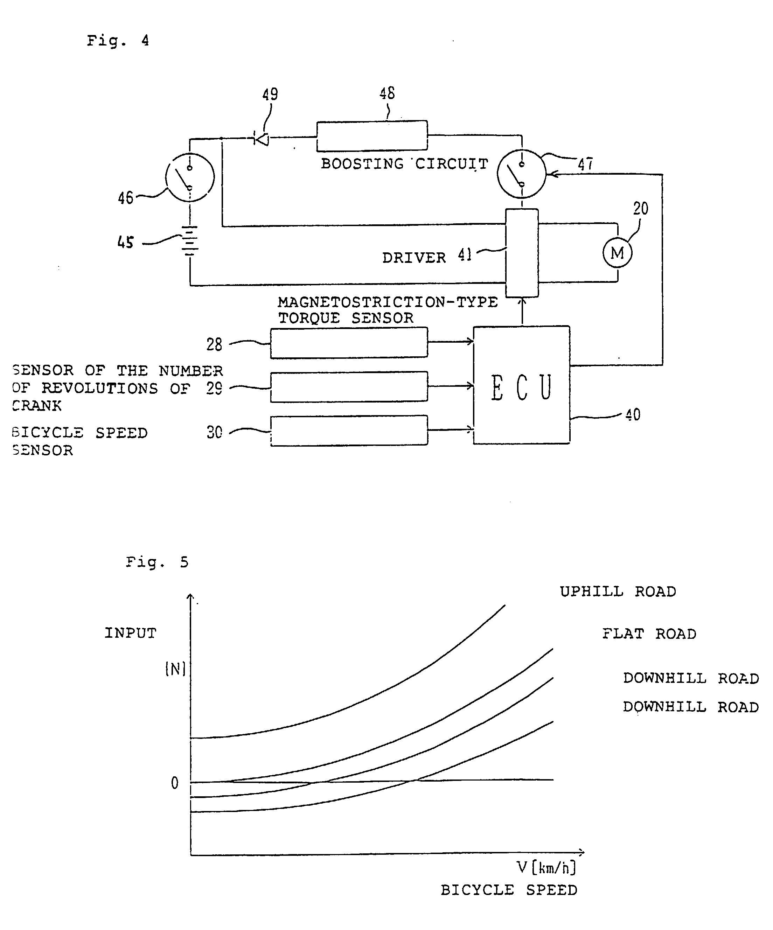

In the above described auxiliary motor device 1 having the above described structure, the DC motor 20 is controlled by an electronic control unit ECU 40 and a control system thereof is schematically shown in Fig. 4.

The ECU unit 40 receives inputs from the above described magnetostriction-type sensor 28, the sensor 29 of the number of revolutions of the crank, the bicycle speed sensor 30 and outputs a control signal to a driver 41, which drives the DC motor 20.

The DC motor 20 is supplied with the electric power of a battery 45 via the driver 41 and the electric power supply circuit has a main switch 46. On the other hand, a regeneration circuit is disposed between the main switch 46 and the driver 41 and a regeneration switch 47, a boosting circuit 48, a diode 49 for preventing a reverse current are arranged in tandem.

The regeneration switch 47 is controlled by the ECU unit 40 and usually turned off. When the main switch 46 is turned on, the battery 45 is in a state of supplying the DC motor 20 with electric power thereof via the driver 41. The ECU unit 40 calculates an input workload from the signal of the number of revolutions of the crank of the sensor 29 of the number of revolutions of the crank and the torque signal of the magnetostriction-type sensor 28 and supply the DC motor 2 0 with electric power so as to assist human power at a given ratio, thereby driving the DC motor 20 to output the assisting force.

On the other hand, in some state of running, the supply of electric power to the DC motor 20 is stopped and, on the contrary, the DC motor 20 is made to work as a generator and the regeneration switch 47 is turned on to regenerate the battery 45 with the electric power generated by the generator via the regeneration circuit.

The electric power generated by the DC motor 20 is boosted by the boosting circuit 48 to make its voltage larger than the specified output voltage of the battery 45 and is returned to the battery 45.

Such a regeneration control described above is hereinafter described.

Fig. 5 shows an input required to run the bicycle at a constant speed on an uphill road with a certain gradient, a flat road and two downhill roads with different gradients.

The input value equals to running resistance and thus increases in proportion to the square of the bicycle speed.

Fig. 5 shows that on the uphill road, even if the bicycle speed is 0 km/h, the input is required to keep 0 km/h and that on the downhill road, the input becomes 0 at a certain bicycle speed and the negative input, or the input in a backward direction, is required to keep the bicycle speed at a smaller bicycle speed than the bicycle speed.

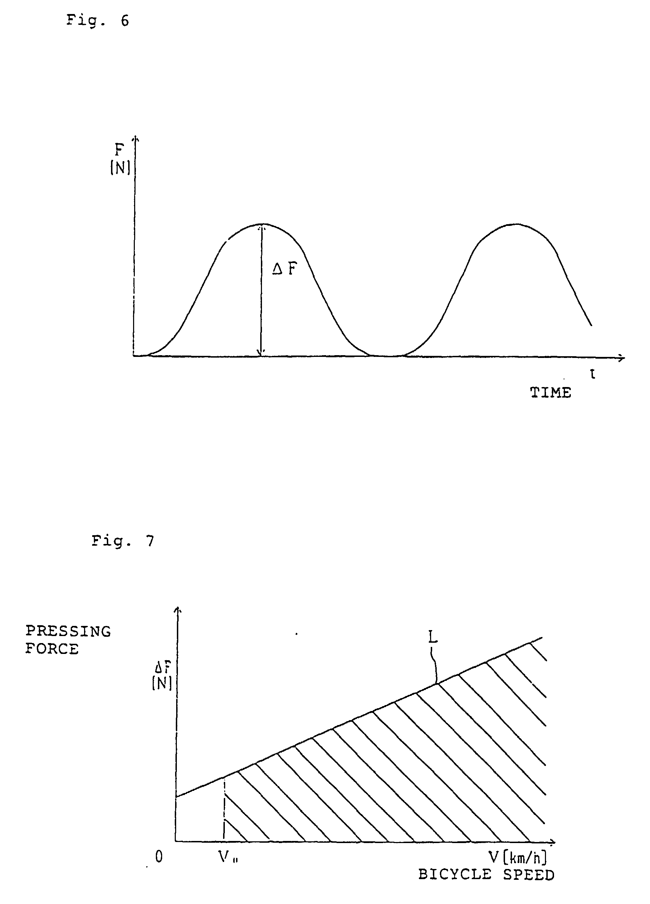

In the case of the present bicycle 0 with an auxiliary motor, the input for running the bicycle is generated by human power and electric power of the DC motor 20, wherein human power is the force with which a rider pressed the pedal 6 and the pressing force F changes wavily as shown in Fig. 6 because the rider presses the right and left pedals with his right and left feet and one cycle corresponds to one revolution of the crank shaft 4.

The maximum value Δ F of the pressing force F changing wavily is used for the control of the DC motor 20. The pressing force Δ F is detected by the above described magnetostriction-type torque sensor 28 and in the case of regeneration control the pressing force Δ F detected by the above described magnetostriction-type torque sensor 28 and the bicycle speed V detected by the bicycle speed sensor 30 are input by the ECU for processing.

In this respect, the ECU unit 40 calculates the rate of change of the bicycle speed V, dV/dt, or an acceleration α, from the bicycle speed V input sequentially in addition to the above described pressing force Δ F and the bicycle speed V and then supplies them to the judgment of regeneration.

Fig. 7 shows a map of judgment of regeneration with coordinates, a horizontal axis shows the bicycle speed V and a vertical axis shows the pressing force Δ F.

In Fig. 7, a slant line increasing with x-coordinate is a judgment line L of regeneration and the bicycle speed V0 is a lower limit of the bicycle speed for regeneration and in the case where the pressing force Δ F is smaller than the judgment line L of regeneration and the bicycle speed is larger than the bicycle speed V0, or in the case where running condition is in the hatched area, the regeneration control of the DC motor 20 is performed.

In this respect, the judgment line L of regeneration is determined by the actual change of the pressing force Δ F to the bicycle speed V when the present bicycle 0 with an auxiliary motor is made to run on a flat road under the control assisted by the DC motor 20.

When the bicycle speed V and the pressing force Δ F is in a relationship of the judgment line L of regeneration, a nearly ideal comfortable running can be realized and the assisting force of the DC motor 20 is controlled such that a relationship between the bicycle speed V and the pressing force Δ F is made in such conditions on the flat road.

Accordingly, whether a road is an uphill road or a downhill road and whatever the gradient of the road is, if the bicycle runs along this judgment line L of regeneration, comfortable running can be realized.

Therefore when the bicycle is running on a downhill road and the pressing force is too small for the bicycle speed or the pressing force Δ F is smaller than the pressing force on the judgment line L of regeneration, the DC motor 20 is changed into a state of regeneration to exert the braking force produced by regeneration, thereby approaching the judgment line L of regeneration by lowering the bicycle speed if the pressing force Δ F is the same.

However, in the present embodiment, acceleration α is checked to determine whether regeneration is actually performed or not.

The judgment line L of regeneration is determined in advance and memorized in the ECU unit 40. The ECU unit 40 compares the pressing force Δ F of the magnetostriction-type sensor 28 and the bicycle speed V of the bicycle speed sensor 30 which are sequentially input when the bicycle is running with the judgment line L of regeneration and judges whether the present conditions are in the range requiring the regeneration or not (in the hatched area in Fig. 7).

Moreover, the ECU unit 40 calculates acceleration α as described above and set the DC motor 20 in the state of regeneration only when the bicycle is in a state of acceleration (α > 0 ).

That is to say, even if the pressing force Δ F is lower than the judgment line L of regeneration, if the acceleration α is 0 or a negative value, the bicycle speed is kept at a constant speed or in a state of deceleration. Since it is hardly necessary in such a state to set the DC motor 20 in a state of regeneration and thereby to disturb the constant speed or to rapidly decelerate, the DC motor 20 is not set in a state of regeneration. The DC motor 20 is set in a state of regeneration only when the bicycle is in a state of acceleration.

When the pressing force Δ F is lower than the judgment line L of regeneration and acceleration α is a positive value, the pressing force is too small for the bicycle speed and the bicycle is in a state of acceleration. Accordingly, in such a case, the braking force is exerted by changing the DC motor 20 into a state of regeneration to control acceleration and to make running conditions stable, thereby approaching comfortable running and regenerating the battery 45 with electric power generated to charge the battery with electricity.

Regeneration conditions when the pressing force exists (Δ F > 0 ) are described above. When the pressing force does not exist (Δ F = 0), or the pedal 6 is not pressed, whether the DC motor is set in a state of regeneration or not is judged only by acceleration α.

That is to say, when the acceleration α is a positive value (α > 0), the DC motor 20 is set in a state of regeneration and when the acceleration α is 0 or a negative value (α ≦ 0), the DC motor 20 is not set in a state of regeneration but in a state of inertia.

When the pressing force Δ F = 0 and the acceleration α > 0, the bicycle is running on the downhill road and is in a state of increasing bicycle speed and thus the DC motor 20 is set in a state of regeneration to put on brakes, thereby saving manual braking operation to keep comfortable running. In this case, the battery 45 can also be charged with regeneration.

Moreover, when the pressing force Δ F = 0 and the acceleration α ≦ 0, in general, the bicycle is running on the flat road or the downhill road with an extremely small gradient and it is not necessary to put on the brakes and thus the DC motor 20 is not set in a state of regeneration to make the rotating shaft 21 of the DC motor 20 free from load or in a state of inertia.

The above described conditions of regeneration may be summarized as follows: in Fig. 7, when the pressing force exists (Δ F > 0), conditions of regeneration are that the bicycle speed V and the pressing force Δ F are in the hatched area surrounded by the judgment line L of regeneration and the bicycle speed V₀ and the acceleration α > 0, and when the pressing force does not exist (Δ F = 0) , condition of regeneration is that the acceleration α > 0.

Moreover, it is also thought that the judgment line L of regeneration is shifted up and down from the position in Fig. 7. If the judgment line L of regeneration is shifted up, the brakes caused by the regeneration of the DC motor 20 tends to be put on the bicycle to produce a heavier running feeling but the battery 45 is more charged than in the above described state. On the contrary, if the judgment line L of regeneration is shifted down, it tends to be difficult to put the brakes on the bicycle to produce a much lighter running feeling than in the above described state.

An object of the present invention is to provide a regeneration control device 40 for a bicycle 0 with an auxiliary motor 1 which can control a motor 20 in a state of regeneration to charge a battery 45 and to keep comfortable running when pressing force is too small for a bicycle speed.

In a bicycle 0 with an auxiliary motor 1 having a drive control means for drive-controlling a motor 20 so as to generate assisting force corresponding to pressing force on a pedal 6, the bicycle 0 with an auxiliary motor 1 is provided with a bicycle speed detection means 30 for detecting the speed of the bicycle, a pressing force detection means 28 for detecting pressing force on the pedal, and a regeneration control device 40 which judges the necessity of regeneration based on a bicycle speed detected by the bicycle speed detection means 30 and pressing force detected by the pressing force detection means 28 and then changes the motor 20 to a state of regeneration.

## Claims

1. A regeneration control device for a bicycle (0) with an auxiliary motor device (1) provided with a device control means (41) for driving an controlling a motor (20) to generate assisting force corresponding to pressing force on a pedal (6), said regeneration control device comprising:
- pressing force detection means (28) for detecting pressing force on the pedal (6); and
- regeneration control means (40) for judging the necessity of regeneration and for changing said motor (20) to a state of regeneration, based on the pressing force detected by said pressing force detection means (28),
**characterized in that**
said regeneration control device further comprising bicycle speed detection means (30) for detecting the speed of the bicycle (0), wherein said regeneration control means (40) judges the necessity of regeneration and changes said motor (20) to said state of regeneration additionally based on the bicycle speed detected by said bicycle speed detection means (30).

2. A regeneration control device for a bicycle (0) with an auxiliary motor (1) as claimed in claim 1, in which said regeneration control device memorizes in advance a judgment value of regeneration of the pressing force corresponding to the bicycle speed and changes said motor (20) to a state of regeneration if actual pressing force detected by said pressing force detection means (28) at a certain bicycle speed is smaller than said judgment value of regeneration.

3. A regeneration control device for a bicycle (0) with an auxiliary motor (1) as claimed in claim 2, in which said regeneration control device determines in advance the pressing force required to run a flat road in response to the bicycle speed under the drive control by said drive control means and memorizes it as said judgment value of regeneration and changes said motor (20) to a state of regeneration if actual pressing force detected by said pressing force detection means (28) at a certain bicycle speed is smaller than said judgment value of regeneration.

4. A regeneration control device for a bicycle (0) with an auxiliary motor (1) as claimed in claim 2 or claim 3, in which said regeneration control device calculates acceleration from the change of the bicycle speed detected by said bicycle speed detection means (30) and changes said motor (20) to a state of regeneration only when the acceleration is a positive value even if the actual pressing force is smaller said judgment value of regeneration.

5. A regeneration control device for a bicycle (0) with an auxiliary motor (1) as claimed in claim 4, in which said regeneration control device changes said motor (20) to a state of regeneration when the actual pressing force detected by said pressing force detection means (28) is zero and the acceleration is a positive value.

## Patentansprüche

1. Regenerierungs-Steuer/Regelvorrichtung für ein Fahrrad (0) mit einer Hilfsmotorvorrichtung (1), die mit einem Vorrichtungs-Steuer/Regelmittel (41) zum Antrieb und Steuern/Regeln eines Motors (20) versehen ist, um entsprechend einer Druckkraft auf ein Pedal (6) eine Hilfskraft zu erzeugen, wobei die Regenerierungs-Steuer/Regelvorrichtung umfasst:
- ein Druckkraft-Erfassungsmittel (28) zum Erfassen der Druckkraft auf das Pedal (6); und
- ein Regenerierungs-Steuer/Regelmittel (40) zum Bewerten des Bedarfs nach Regenerierung und zum Schalten des Motors (20) in einen Regenerierungszustand auf der Basis der von dem Druckkraft-Erfassungsmittel (28) erfassten Druckkraft,
**dadurch gekennzeichnet,**
dass die Regenerierungs-Steuer/Regelvorrichtung ferner ein Fahrgeschwindigkeits-Erfassungsmittel (30) zum Erfassen der Geschwindigkeit des Fahrrads (0) umfasst, wobei das Regenerierungs-Steuer/Regelmittel (40) zusätzlich auf der Basis der von dem Fahrgeschwindigkeits-Erfassungsmittel (30) erfassten Fahrgeschwindigkeit den Bedarf nach Regenerierung bewertet und den Motor (20) in den Regenerierungszustand schaltet.

2. Regenerierungs-Steuer/Regelvorrichtung für ein Fahrrad (0) mit Hilfsmotor (1) nach Anspruch 1, wobei die Regenerierungs-Steuer/Regelvorrichtung vorab einen Regenerierungs-Bewertungswert der Druckkraft entsprechend der Fahrgeschwindigkeit speichert und den Motor (20) in einen Regenerierungszustand schaltet, wenn die bei einer bestimmten Fahrgeschwindigkeit von dem Druckkraft-Erfassungsmittel (28) erfasste momentane Druckkraft geringer als der Regenerierungs-Bewertungswert ist.

3. Regenerierungs-Steuer/Regelvorrichtung für ein Fahrrad (0) mit Hilfsmotor (1) nach Anspruch 2, wobei die Regenerierungs-Steuer/Regelvorrichtung vorab die zum Fahren auf flacher Straße erforderliche Druckkraft in Antwort auf die Fahrgeschwindigkeit unter der Antriebs-Steuerung/Regelung durch das Antriebs-Steuer/Regelmittel bestimmt und diese als Regenerierungs-Bewertungswert speichert und den Motor (20) in einen Regenerierungszustand schaltet, wenn die von dem Druckkraft-Erfassungsmittel (28) bei einer bestimmten Fahrgeschwindigkeit erfasste momentane Druckkraft geringer als der Regenerierungs-Bewertungswert ist.

4. Regenerierungs-Steuer/Regelvorrichtung für ein Fahrrad (0) mit Hilfsmotor (1) nach Anspruch 2 oder Anspruch 3, wobei die Regenerierungs-Steuer/Regelvorrichtung eine Beschleunigung aus der Änderung der vom Fahrgeschwindigkeits-Erfassungsmittel (30) erfassten Fahrgeschwindigkeit berechnet und den Motor (20) in einen Regenerierungszustand nur dann schaltet, wenn die Beschleunigung einen positiven Wert hat, auch wenn die momentane Druckkraft geringer als der Regenerierungs-Bewertungswert ist.

5. Regenerierungs-Steuer/Regelvorrichtung für ein Fahrrad (0) mit Hilfsmotor (1) nach Anspruch 4, wobei die Regenerierungs-Steuer/Regelvorrichtung den Motor (20) in einen Regenerierungszustand schaltet, wenn die von dem Druckkraft-Erfassungsmittel (28) erfasste momentane Druckkraft null ist und die Beschleunigung einen positiven Wert hat.

## Revendications

1. Dispositif de commande de régénération pour une bicyclette (0) comportant un dispositif (1) de moteur auxiliaire pourvu d'un moyen (41) de commande de dispositif pour entraîner et commander un moteur (20) pour générer une force d'assistance correspondant à une force de pression sur une pédale (6), ledit dispositif de commande de régénération comportant :
- un moyen (28) de détection de force de pression destiné à détecter une force de pression sur la pédale (6); et
- un moyen (40) de commande de régénération destiné à juger de la nécessité de régénération et à faire passer ledit moteur (20) à un état de régénération, en fonction de la force de pression détectée par ledit moyen (28) de détection de force de pression,
caractérisée en ce que
ledit dispositif de commande de régénération comporte, en outre, un moyen (30) de détection de vitesse de la bicyclette (0), ledit moyen (40) de commande de régénération jugeant de la nécessité de régénération et faisant passer ledit moteur (20) audit état de régénération en fonction, en outre, de la vitesse de la bicyclette détectée par ledit moyen (30) de détection de vitesse de la bicyclette.

2. Dispositif de commande de régénération pour une bicyclette (0) à moteur auxiliaire (1) selon la la revendication 1, dans lequel ledit dispositif de commande de régénération mémorise d'avance une valeur de jugement de régénération de la force de pression correspondant à la vitesse de la bicyclette et fait passer ledit moteur (20) à un état de régénération, si la force de pression réelle détectée par ledit moyen (28) de détection de force de pression à une certaine vitesse de la bicyclette est inférieure à ladite valeur de jugement de régénération.

3. Dispositif de commande de régénération pour une bicyclette (0) à moteur auxiliaire (1) selon la revendication 2, dans lequel ledit dispositif de commande de régénération détermine d'avance la force de pression nécessaire pour rouler sur une route plate en réponse à la vitesse de la bicyclette sous la commande d'entraînement par ledit moyen de commande d'entraînement et la mémorise comme dite valeur de jugement de régénération et fait passer ledit moteur (20) à un état de régénération, si la force de pression réelle détectée par ledit moyen (28) de détection de force de pression à une certaine vitesse de la bicyclette est inférieure à ladite valeur de jugement de régénération.

4. Dispositif de commande de régénération pour une bicyclette (0) à moteur auxiliaire (1) selon la revendication 2 ou 3, dans lequel ledit dispositif de commande de régénération calcule l'accélération à partir de la variation de vitesse de la bicyclette détectée par ledit moyen (30) de détection de vitesse de la bicyclette et ne fait passer ledit moteur (20) à un état de régénération que lorsque l'accélération a une valeur positive, même si la force de pression réelle est inférieure à ladite valeur de jugement de régénération.

5. Dispositif de commande de régénération pour une bicyclette (0) à moteur auxiliaire (1) selon la revendication 4, dans lequel ledit dispositif de commande de régénération fait passer ledit moteur (20) à un état de régénération que lorsque la force de pression réelle détectée par ledit dispositif (28) de détection de force de pression est égale à zéro et que l'accélération a une valeur positive.
